# EUROPÄISCHE PATENTSCHRIFT

(11) **EP 1 010 923 B1**
(45) Veröffentlichungstag und Bekanntmachung des Hinweises auf die Patenterteilung: **28.04.2004**
(21) Anmeldenummer: 99890366.0
(22) Anmeldetag: 15.11.1999
(51) Int. Cl.: F16H 57/04

(54) **Schmiereinrichtung für ein mehrstufiges Getriebe**
Lubrication device for multi-stage transmission
Lubrication pour transmission à plusieurs étages

(30) Priorität: 15.12.1998 AT 209198
(43) Veröffentlichungstag der Anmeldung: 21.06.2000
(73) Patentinhaber: Bombardier Transportation GmbH, 13627 Berlin (DE)
(72) Erfinder: Gukenbiehl, Karl L., Dipl.-Ing., 2371 Hinterbrühl (AT); Heschl, Karl, 2393 Sittendorf (AT)
(74) Vertreter: Sonn, Helmut

(56) Entgegenhaltungen:
- DE-A- 3 600 871
- DE-A- 3 719 096
- GB-A- 290 225
- GB-A- 2 147 064
- US-A- 5 092 196
- US-A- 5 505 112
- DATABASE WPI Section PQ, Week 198343 Derwent Publications Ltd., London, GB; Class Q64, AN 1983-799733 XP002184750 -& SU 983 361 A (SAFONOV A I), 23. Dezember 1982 (1982-12-23)

## Beschreibung

Die Erfindung betrifft eine Einrichtung für ein mehrstufiges Getriebe mit den Merkmalen des Oberbegriffs des Anspruchs 1.

Getriebe dienen zur Herabsetzung der vorzugsweise hohen Drehzahl von Motoren auf die für die weitere Verwendung zweckmäßige Drehzahl. Da die gewünschte Übersetzung bzw. Untersetzung meist sehr hoch ist, sind mehrere Stufen zur Herabsetzung der Drehzahl über mehrere Zahnräder unterschiedlichen Durchmessers notwendig. Zur Schmierung des Getriebes müssen den Zahnrädern geeignete Schmiermittel, wie z.B. Getriebeöl, zugeführt werden. Neben der Schmierung der Verzahnung dient das Schmiermittel auch zur Kühlung des Getriebes, da die produzierte Verlustwärme über eine ausreichende Menge von Getriebeöl od. dgl. in geeigneter Weise an die Umgebung abgeführt werden kann. Zur Vermeidung zusätzlicher elektrisch oder anders angetriebener Ölpumpen ist die sogenannte Ölsumpfschmierung bei Getriebekästen weit verbreitet. Dabei taucht ein oder mehrere Zahnräder in einen, im Getriebekasten angeordneten, Ölsumpf ein, sodaß bei Betrieb, d.h. bei Drehung der Zahnräder ein Teil des Schmiermittels mitgerissen wird und die Verzahnung schmiert. Bei mehrstufigen Getrieben ist es erforderlich, daß die Zahnräder der einzelnen Stufen so angeordnet sind, daß sie alle in den Ölsumpf eintauchen. Da üblicherweise die Durchmesser der Zahnräder der einzelnen Stufen relativ großen Unterschied aufweisen, ist eine solche Anordnung relativ aufwendig und immer mit einem kompliziert geteilten Getriebekasten verbunden. Tauchen die Zahnräder der unterschiedlichen Stufen des Getriebes unterschiedlich tief in den Ölsumpf ein, resultieren bei jenem Zahnrad, welches tiefer in den Ölsumpf eintaucht, zu große Planschverluste und Reibungsverluste, da das mitgerissene Getriebeöl od. dgl. auch verdrängt werden muß. Die Anordnung der Achsen der einzelnen Stufen des Getriebes in einer, vorzugsweise horizontalen Richtung, hat den Vorteil, daß der Getriebekasten entlang dieser, im wesentlichen horizontal orientierten Richtung, geteilt werden kann. Eine solche horizontale Teilung ist optimal dicht zu halten und am besten geeignet für eine Montage, Demontage und Wartung der Getriebeteile von unten.

Ein Getriebe mit verringerten Planschverlusten ist beispielsweise aus der US 5 505 112 A bekannt. Dabei ist im Ölsumpf des Getriebekastens ein Einsatz angeordnet, mit dem für ein Zahnrad eine Ölniveauregulierung durchgeführt werden kann. Aus der SU 983 361 A ist ein Getriebe mit horizontaler Anordnung der Drehachsen der Getrieberäder ersichtlich, bei dem das Ölniveau im Bereich des Verzahnungseingriffes über dem Ölstand im Getriebe gehalten werden soll. Nachteilig bei dieser Konstruktion ist eine Erhöhung der Planschverluste und auch die Tatsache, daß die Konstruktion nur in einer Drehrichtung funktioniert. Das Getriebe gemäß der DE 37 190 96 A1 zeigt eine Unterteilung in zwei Ölkammern zur Erzielung einer guten Schmierwirkung mit Wärmeabfuhr. Die Ölkammern sind nicht miteinander verbunden, weshalb das Öl aus beiden Kammern separat abgelassen werden muß. Das Getriebe gemäß der GB 2 147 064 A dient zur Verbesserung der Schaltbarkeit des Getriebes im kalten Zustand. Es sind keine Mittel zur Regulierung des Ölniveaus vorhanden. Darüber hinaus funktioniert die Konstruktion nur in einer Drehrichtung. Andere Konstruktionen, wie zum Beispiel die Schmiermittelfördereinrichtung entsprechend der DE 36 00 871 A1 dient zur Förderung des Öls über außenliegenden Leitungen zu höher gelegenen Schmierstellen. Eine Funktion ist auch hier nur bei einer Drehrichtung gewährleistet. Die US 5 092 196 A offenbart ein Getriebe mit einem im unteren Bereich des Getriebekastens angeordneten Einsatz, der Ausformungen entsprechend der Größe der Zahnräder aufweist, wodurch ein höheres Ölniveau im Getriebekasten erreicht werden kann. Es werden damit allerdings keine unterschiedlichen Ölniveaus für optimale Schmierung unterschiedlich großer Zahnräder erreicht.

Eine Einrichtung für ein mehrstufiges Getriebe der gattungsgemäßen Art ist aus der GB 290 225 A bekannt, bei der die Zahnräder eines einstufigen Getriebes jeweils in eine zugehörige Wanne eintauchen. Durch die Bewegung des Großrades wird Getriebeöl in die Wanne des Kleinrades befördert. Um eine ausreichende Schmierung zu gewährleisten, muß das Großrad relativ tief in den Ölsumpf eintauchen, weshalb relativ hohe Plansch- und Reibungsverluste bedingt sind.

Die Aufgabe der vorliegenden Erfindung besteht in der Schaffung einer oben genannten Einrichtung für ein mehrstufiges Getriebe, durch welche eine optimale Schmierung der Getriebezahnräder möglich ist und allfällige Plansch- und Reibungsverluste minimiert werden können. Darüber hinaus soll mit Hilfe der erfindungsgemäßen Konstruktion eine horizontale Teilung des Getriebekastens möglich sein. Weiters besteht eine Aufgabe der Erfindung darin, daß die erfindungsgemäße Einrichtung ohne große konstruktive Veränderungen für verschiedene Getriebe, d.h. verschiedene Übersetzungsverhältnisse, anwendbar sein soll. Nachteile bekannter Getriebe sollen dabei vermieden bzw. reduziert werden.

Gelöst wird die erfindungsgemäße Aufgabe durch die Merkmale des Anspruchs 1. Die oder jede Wanne weist zumindest einen Abstreifer mit jeweils zumindest einer Öffnung auf. Durch die an sich bekannte Anordnung der Drehachsen des oder jedes Zwischenrades und des Großrades auf einer im wesentlichen horizontalen Ebene wird eine horizontale Teilung des Getriebekastens mit den damit verbundenen Vorteilen ermöglicht. Durch die unterschiedliche Größe der Zahnräder des Getriebes ragen diese bei horizontaler Anordnung der Drehachsen normalerweise unterschiedlich tief in den Getriebeölsumpf. Der Einsatz wird in den unteren Teil des Getriebekastens, in welchem sich der Ölsumpf befindet, angeordnet und vorzugsweise mit diesem verbunden. Entsprechend der Übersetzung des Getriebes und der Stufenzahl weist der Einsatz eine entsprechende Anzahl von Wannen bzw. wannenförmigen Ausformungen auf, in die Teile der Zwischenräder und des Großrades des Getriebes eintauchen, sodaß bei Drehung der Zahnräder des Getriebes gewährleistet ist, daß jede Verzahnung jeder Stufe des Getriebes mit ausreichender Menge an Getriebeöl oder anderem Schmiermittel versorgt wird. Durch die Einrichtung wird andererseits vermieden, daß die Zahnräder des Getriebes unterschiedlich tief in einen Ölsumpf mit nur einem Niveau des Öles eintauchen und somit auch unterschiedliche Reibungsverluste erleiden und unterschiedliche Verdrängungsarbeiten leisten müssen. Die Herstellung mindestens zweier unterschiedlicher Niveaus des Getriebeöles wird durch eine Verbindung der Wannen bzw. wannenförmigen Ausformungen untereinander sowie mindestens einer Wanne mit dem Ölsumpf im Getriebekasten über geeignete Kanalsysteme bzw. Öffnungen erzielt.
Durch den zumindest einen Abstreifer auf der oder jeden Wanne können die Plansch- und Reibungsverluste durch zu viel durch die Zahnräder mitgerissenes Getriebeöl vermieden werden. Über den Abstreifer, der in gewissem Abstand zum äußerten Umfang des jeweiligen Zahnrades steht, wird überschüssiges Getriebeöl abgestreift und über die oder jede Öffnung abgeführt. Das abgeführte Öl des Großrades kann dabei gleich zur Versorgung des Zwischenrades mit Getriebeöl in die dem Zwischenrad zugeordnete Wanne befördert werden.

Gemäß einer Ausführungsform der Erfindung weist die Wanne für das Großrad zumindest eine Öffnung od. dgl. und die oder jede weitere Wanne zumindest einen Zulauf auf, welcher Zulauf in Verbindung mit der oder jeder Öffnung der Wanne steht. Dadurch kann das Getriebeöl von der Wanne für das Großrad über die Öffnung od. dgl. und den Zulauf der weiteren Wanne in diese gelangen.

Vorteilhafterweise ist jeder Zulauf, jeder allfällige Abstreifer und Öffnung symmetrisch in Bezug auf die Drehachse der Zwischenräder und des Großrades angeordnet. Dadurch ist die Funktion der Einrichtung unabhängig von der Drehrichtung des Motors bzw. Getriebes.

Zur Beförderung des Getriebeöls von einer zur anderen Wanne ist für eine Drehrichtung eine Verbindung erforderlich, die gemäß einem weiteren Merkmal der Erfindung durch zumindest eine Rinne, welche zwischen einer Öffnung od. dgl. der Wanne und einem Zulauf der oder jeder weiteren Wanne angeordnet ist, gebildet ist.

Dabei wird die Rinne vorteilhafterweise durch eine Kante begrenzt. Durch die Höhe der Kante kann die Durchflußmenge des Getriebeöls beeinflußt werden. Das überschüssige Getriebeöl fließt über die Kante beispielsweise direkt in den Ölsumpf.

In gleicher Weise kann am Einsatz mindestens ein Überlauf angeordnet sein, über den überschüssiges Getriebeöl in den Ölsumpf im Getriebekasten abfließen kann. Durch Höhe und Größe des Überlaufs kann die Menge des Getriebeöls reguliert werden.

Vorteilhafterweise ist der erfindungsgemäße Einsatz möglichst glattwandig ausgebildet. Ein derartiges Stück ist leicht herzustellen und durch die Glattwandigkeit relativ einfach zu reinigen und zu warten.

Gemäß einem weiteren Merkmal der Erfindung ist vorgesehen, daß der Einsatz aus Aluminium oder einer Aluminiumlegierung besteht und durch Gießen hergestellt ist. Derartige Materialien sind durch geringes Gewicht und relativ einfache Fertigbarkeit ausgezeichnet.

Gemäß einem weiteren Merkmal der Erfindung sind Muffen od. dgl. zum Einstecken in die Zuläufe und Öffnungen vorgesehen. Durch derartige Einsätze von beispielsweise Kunststoffhülsen od. dgl. ist in einfacher Weise eine Anpassung an die jeweiligen Verhältnisse zur Einstellung der gewünschten Getriebeöldurchflußmenge möglich. Natürlich kann die Getriebeölmenge auch mit anderen Mitteln, beispielsweise mit Blenden od. dgl. auf mechanische Art und Weise robust gesteuert werden.

Vorteilhafterweise sind am Einsatz Bohrungen zur Aufnahme von Verbindungsschrauben od. dgl. zur Verbindung mit dem Getriebekasten bzw. dem unteren Teil des Getriebekastens und Schlitze od. dgl. zur Abführung überschüssigen Getriebeöls und zur Gewichtsreduktion angeordnet.

Es ist natürlich auch möglich, daß der Einsatz im Getriebekasten bzw. im unteren Teil des Getriebekastens integriert und gegebenenfalls mit diesem in einem Arbeitsgang hergestellt ist.

Die Merkmale der Erfindung werden anhand der beigefügten Abbildungen, welche eine bevorzugte Ausführungsform der Erfindung für ein zweistufiges Getriebe zeigen, näher erläutert.

Darin zeigen
- Fig. 1: eine Seitenansicht eines integrierten Antriebes, umfassend einen Motor und ein zweistufiges Getriebe sowie den erfindungsgemäßen Einsatz,
- Fig. 2: eine perspektivische Ansicht einer bevorzugten Ausführungsform des erfindungsgemäßen Einsatzes für ein zweistufiges Getriebe entsprechend Fig. 1,
- Fig. 3: eine Draufsicht auf den Einsatz gemäß Fig. 2,
- Fig. 4: eine Ansicht des Einsatzes gemäß Fig. 2 von unten,
- Fig. 5: einen Schnitt entlang der Schnittlinie V-V gemäß Fig. 3,
- Fig. 6: einen Schnitt entlang der Schnittlinie VI-VI gemäß Fig. 3,
- Fig. 7: einen Schnitt entlang der Schnittlinie VII-VII gemäß Fig. 3, und
- Fig. 8: eine Seitenansicht von links des Einsatzes gemäß Fig. 2.

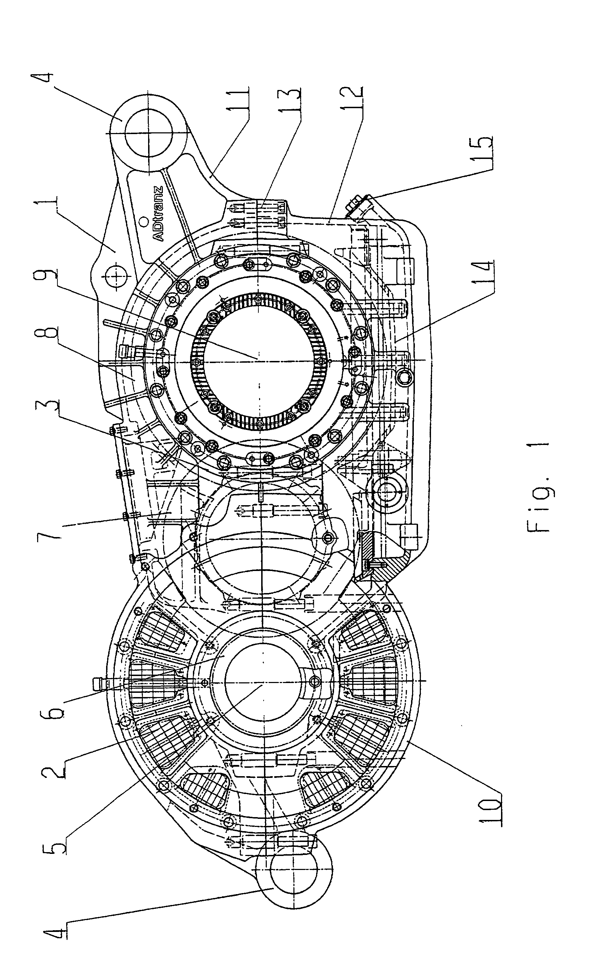

Fig. 1 zeigt einen integrierten Antrieb, bestehend aus einem Getriebekasten 1, der einstückig mit dem Motorgehäuse aufgebaut sein kann oder mit dem Motorgehäuse verbunden sein kann. Der integrierte Antrieb enthält einen Motor 2 und das Getriebe 3. Zur Aufhängung des Antriebes sind die Aufhängungen 4, vorzugsweise einstückig mit dem Getriebekasten bzw. Motorgehäuse verbunden. Die Rotorwelle 5 des Motors 2 ist mit einem Kleinrad 6 drehfest verbunden, welches ein Zwischenrad 7 antreibt, das wiederum ein Großrad 8 des Getriebes 3 in Drehung versetzt und somit die mit dem Großrad 8 verbundene Antriebswelle 9 zur Rotation zwingt. Im Falle eines Antriebes für ein Fahrzeug kann die Antriebswelle 9 mit dem Fahrzeugrad drehfest verbunden sein (nicht dargestellt). Zur Montage bzw. Demontage des Motors 2 ist am Gehäuse ein Lagerschild 10 angeordnet. Der Getriebekasten 1 bzw. das gesamte Gehäuse des integrierten Antriebes ist in einen oberen Teil 11 des Getriebekastens und einen unteren Teil 12 des Getriebekastens geteilt und mit Hilfe von Schrauben 13 miteinander verbunden. Die Trennlinie zwischen oberen Teil 11 des Getriebekastens 1 und unteren Teil 12 des Getriebekastens 1 ist vorzugsweise horizontal verlaufend angeordnet, sodaß eine leichte Montage, Demontage und Wartung der im Inneren angeordneten Teile des Antriebes möglich ist. Der erfindungsgemäße Einsatz 14 ist am Boden des unteren Teiles 12 des Getriebekastens 1 angeordnet und über Schrauben od. dgl. (nicht dargestellt) mit diesem verbunden oder einstückig mit diesem hergestellt. Über eine Einfüllöffnung 15 kann der Getriebekasten 1 mit Getriebeöl oder anderen Schmiermitteln bis zu einem bestimmten gewünschten Niveau angefüllt werden. Die vorliegende Erfindung bezieht sich nicht nur wie dargestellt auf zweistufige Getriebe, sondern ist auf mehrstufige Getriebe entsprechend anwendbar.

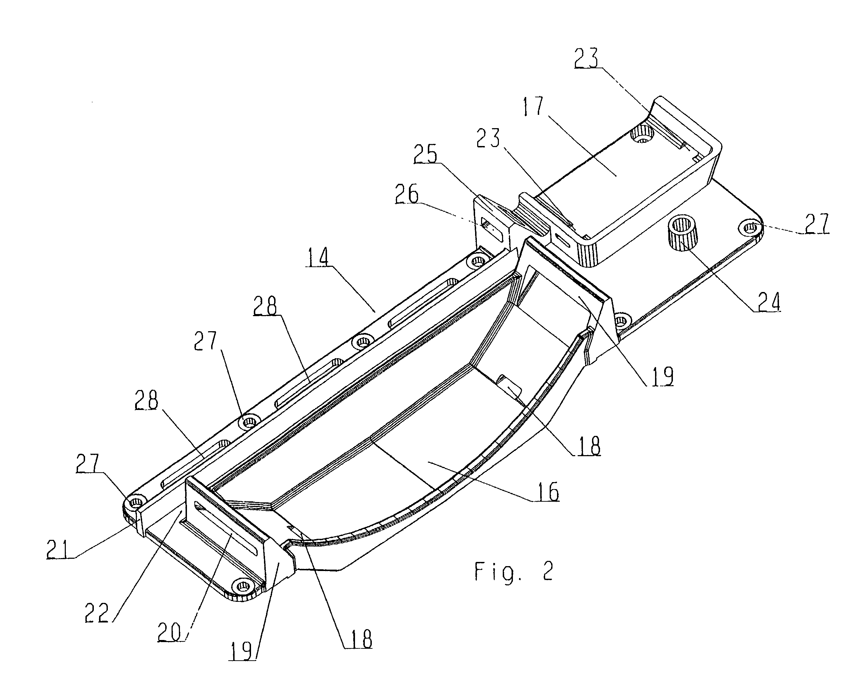

Fig. 2 zeigt eine perspektivische Ansicht des erfindungsgemäßen Einsatzes 14. Der Einsatz 14 weist zwei Wannen 16, 17 bzw. wannenförmige Ausformungen auf, in welche das Großrad 8 des Getriebes und das Zwischenrad 7 des Getriebes 3 teilweise hineinragen. Bei Anordnung des Einsatzes 14 im unteren Teil 12 des Getriebekastens 1, in welchem der Ölsumpf gebildet ist, wird über Zuläufe 18, welche in der Wanne 16 angeordnet sind, bei Drehung des Großrades Getriebeöl aus dem Ölsumpf angesaugt. Um zu vermeiden, daß zuviel Getriebeöl mit dem rotierenden Großrad mitbefördert wird, sind seitlich der Wanne 16 Abstreifer 19 angeordnet, welche eine Öffnung 20 aufweisen, durch die überschüssiges am Großrad anhaftendes Öl abgestreift und durch die Öffnung 20 abgeführt wird. Bei Drehung des Großrades 8 entgegen des Uhrzeigersinnes wird das Getriebeöl durch den rechten Abstreifer 19 abgestreift und durch die rechte Öffnung 20 weiterbefördert, wo es durch eine Öffnung 23 in die Wanne 17 gelangt und dort einen Ölsumpf bildet, welcher ein unterschiedliches Niveau wie jener Ölsumpf in Wanne 16 aufweist. Zur Vermeidung daß durch das Zwischenrad 7 zuviel Öl mitbefördert wird, ist auch seitlich neben der Wanne 17 ein Abstreifer 25 angeordnet und mit einer Öffnung 26 versehen, über welche das überschüssige Getriebeöl in den Ölsumpf zurückgeleitet wird. Der gegenüberliegende Abstreifer kann beispielsweise mit dem unteren Teil 12 des Getriebegehäuses 1 verbunden sein bzw. mit diesem einstückig hergestellt sein. Durch Variation der Größen und Formen der Öffnungen 18, 20, 23 und 26 kann die gewünschte Durchflußmenge des Getriebeöles an die jeweiligen Anforderungen und Einsatzfälle wie Drehgeschwindigkeit und Umgebungsbedingungen, durch welche die Viskosität des Öles beeinflußt werden kann, angepaßt werden. Eine derartige Anpassung kann flexibel gestaltet werden durch Anordnung von buchsenförmigen Elementen, beispielsweise aus Kunststoff od. dgl., durch die der Querschnitt der Öffnungen 18, 20, 23, 26 verändert werden kann. Um eine Unabhängigkeit von der Drehrichtung zu erzielen, muß das bei Drehung des Großrades 8 im Uhrzeigersinn durch die linke Öffnung 20 beförderte Getriebeöl über ein Kanalsystem zur Wanne 17 geleitet werden. Dies geschieht bei der dargestellten Ausführungsform der Erfindung durch eine Kante 21, welche zusammen mit der Begrenzung der Wanne 16 eine Rinne 22 bildet, durch welche das Getriebeöl in Richtung Wanne 17 gelangen kann. Die Höhe der Kante 21 beeinflußt dabei die gewünschte Menge des Getriebeöles, welches in Richtung der Wanne 17 befördert wird. Das die Wanne 17 umgebende Getriebeöl kann durch einen Überlauf 24, der mit dem Ölsumpf verbunden ist, beeinflußt werden. Der Überlauf 24 kann in Form einer Hohlschraube gebildet sein oder mit dem Einsatz 14 einstückig hergestellt werden. Vorteilhafterweise ist der Einsatz 14 einstückig aufgebaut und durch Gießen hergestellt. Bevorzugte Materialien sind Aluminium oder Aluminiumlegierungen. Aber auch beständige Kunststoffe sind durchaus denkbar. Über Bohrungen 27 kann der Einsatz 14 mit Hilfe von Schrauben od. dgl. (nicht dargestellt) mit dem Getriebekasten 1 verbunden werden. Allfällige Schlitze 28 od. dgl. dienen zur Rückführung des Getriebeöles in den Ölsumpf und gleichzeitig zur Material- und Gewichtseinsparung. Ansonsten werden Unebenheiten und Löcher tunlichst vermieden, da sich daran Verunreinigungen anlagern können, welche zur Blockade des Getriebeölflusses führen können und eine einwandfreie Funktion der Erfindung unterbinden und somit eine einwandfreie Schmierung und Kühlung des Getriebes verhindern können.

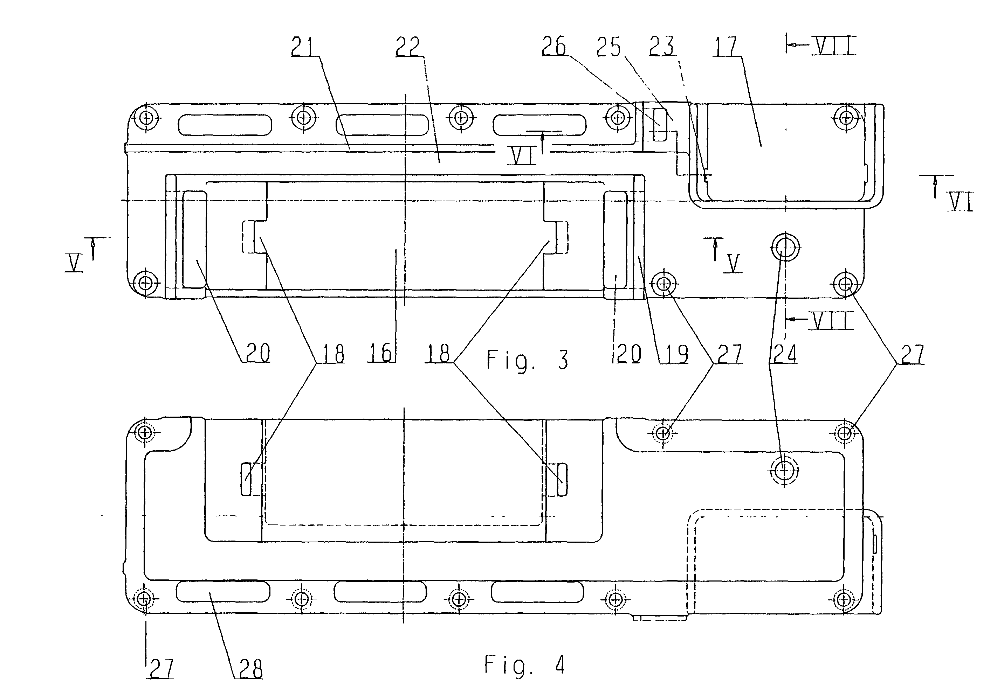

In der Draufsicht auf den Einsatz 14 gemäß Fig. 3 ist die Rinne 22 gut erkennbar. Der Schnitt entlang der Schnittlinie V-V gemäß Fig. 3 zeigt die Abstreifer 19 mit den Öffnungen 20 der Wanne 16 in geeigneterer Darstellung.

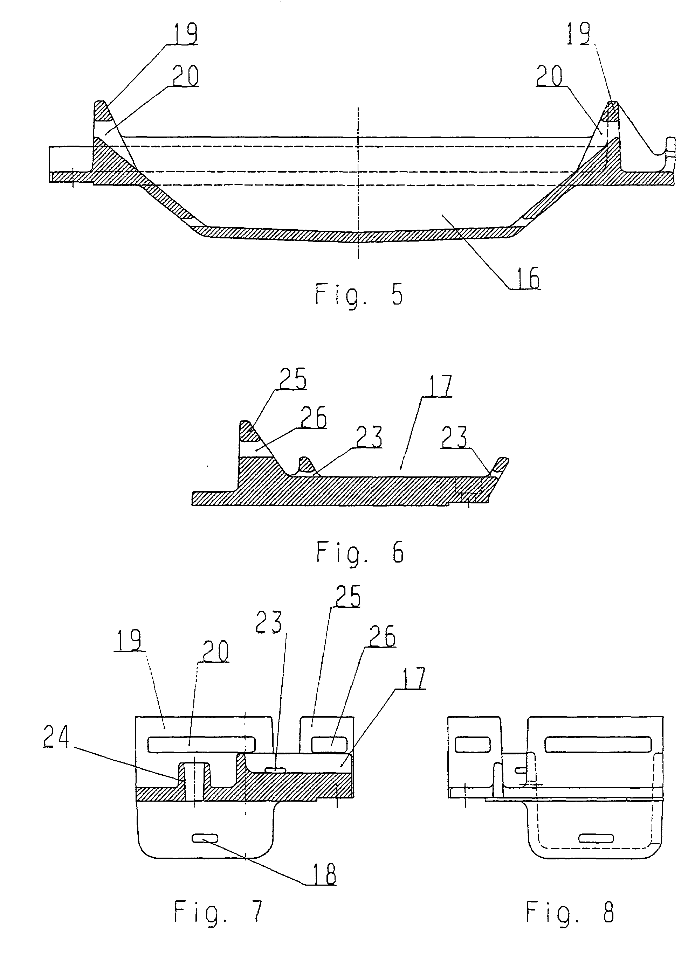

Fig. 6 zeigt einen Schnitt entlang der Schnittlinie VI-VI gemäß Fig. 3, aus dem der Abstreifer 25 für das Zwischenrad 7 mit der Öffnung 26 sowie die Öffnungen 23, welche die Wanne 17 mit der Umgebung verbinden, gut erkennbar.

Die Fig. 7 zeigt den Schnitt entlang der Schnittlinie VII-VII gemäß Fig. 3, woraus im Querschnitt der Überlauf 24 gut erkennbar ist. Im gezeigten Ausführungsbeispiel ist dieser einstückig mit dem Einsatz 14 hergestellt.

Die Seitenansicht von links gemäß Fig. 8 zeigt die Gestalt der Rinne 22 im Querschnitt.

Natürlich ist im Rahmen der Erfindung eine Abänderung der dargestellten bevorzugten Ausführungsform möglich. So kann der Einsatz 14 auch mehrstückig aufgebaut sein. Darüber hinaus ist eine Integration des Einsatzes 14 im Getriebekasten 1 bzw. im unteren Teil 12 des Getriebekastens 1 möglich.

Der Einsatz kann an die jeweiligen Anforderungen angepaßt werden und in bestehende Getriebekästen eingesetzt werden.

## Patentansprüche

1. Einrichtung für ein mehrstufiges Getriebe umfassend einen Getriebekasten (1), zumindest ein Zwischenrad (7) und ein mit einer Antriebswelle (9) verbundenes Großrad (8), wobei zur Schmierung des Getriebes Getriebeöl od. dgl. im Getriebekasten (1) vorgesehen ist, und einen im Ölsumpf des Getriebekastens (1) angeordneten Einsatz (14) mit zumindest einem Zulauf (18) vom Ölsumpf des Getriebekastens (1) zur Erzielung unterschiedlicher Niveaus des Getriebeöl im Betrieb des Getriebes, wobei die Drehachsen des oder jedes Zwischenrades (7) und des Großrades (8) auf einer im wesentlichen horizontalen Ebene angeordnet sind, und wobei der Einsatz (14) mindestens zwei Wannen (16, 17) aufweist, in welche das oder jedes Zwischenrad (7) und das Großrad (8) des Getriebes zum Teil eintauchen, wobei der oder jeder Zulauf (18) vom Ölsumpf des Getriebekastens (1) in der Wanne (16) für das Großrad (8) mündet, und die Wanne (16) für das Großrad (8) mit der oder jeder weiteren Wanne (17) verbunden ist, sodaß bei Betrieb des Getriebes in den Wannen (16, 17) unterschiedliche Niveaus des Getriebeöls aufrechterhalten werden, **dadurch gekennzeichnet, daß** die oder jede Wanne (16, 17) zumindest einen Abstreifer (19,25) mit jeweils zumindest einer Öffnung (20, 26) aufweist.

2. Einrichtung nach Anspruch 1, **dadurch gekennzeichnet, daß** die Wanne (16) für das Großrad (8) zumindest die eine Öffnung (20) od. dgl. und die oder jede weitere Wanne (17) zumindest einen Zulauf (23) aufweist, welcher Zulauf (23) in Verbindung mit der oder jeder Öffnung (20) der Wanne (16) steht.

3. Einrichtung nach Anspruch 2, **dadurch gekennzeichnet, daß** jeder Zulauf (18, 23), jeder allfällige Abstreifer (19, 25) und Öffnung (20) symmetrisch angeordnet ist.

4. Einrichtung nach einem der Ansprüche 2 oder 3, **dadurch gekennzeichnet, daß** zumindest eine Öffnung (20) od. dgl. der Wanne (16) mit zumindest einem Zulauf (23) der oder jeder weiteren Wanne (17) über eine Rinne (22) in Verbindung steht.

5. Einrichtung nach Anspruch 4, **dadurch gekennzeichnet, daß** die Rinne (22) durch eine Kante (21) begrenzt ist.

6. Einrichtung nach einem der Ansprüche 1 bis 5, **dadurch gekennzeichnet, daß** am Einsatz mindestens ein Überlauf (24) angeordnet ist.

7. Einrichtung nach einem der Ansprüche 1 bis 6, **dadurch gekennzeichnet, daß** der Einsatz (14) möglichst glattwandig ausgebildet ist.

8. Einrichtung nach einem der Ansprüche 1 bis 7, **dadurch gekennzeichnet, daß** der Einsatz (14) aus Aluminium oder einer Aluminiumlegierung besteht und durch Gießen hergestellt ist.

9. Einrichtung nach einem der Ansprüche 1 bis 8, **dadurch gekennzeichnet, daß** Muffen od. dgl. zum Einstecken in die Zuläufe (18, 23) und Öffnungen (20, 26) vorgesehen sind.

10. Einrichtung nach einem der Ansprüche 1 bis 9, **dadurch gekennzeichnet, daß** am Einsatz (14) Bohrungen (27) zur Aufnahme von Verbindungsschrauben od. dgl. und Schlitze (28) od. dgl. angeordnet sind.

11. Einrichtung nach einem der Ansprüche 1 bis 10, **dadurch gekennzeichnet, daß** der Einsatz (14) im Getriebekasten (1) bzw. im unteren Teil des Getriebekastens (12) integriert und gegebenenfalls mit diesem in einem Arbeitsgang hergestellt ist.

## Claims

1. An arrangement for a multi-step gear, comprising a gearbox (1), at least one intermediate gear (7) and a large gear (8) connected to a drive shaft (9), gear oil or the like being provided in the gearbox casing (1) for lubricating the gearing, and an insert (14) arranged in the oil sump of the gearbox casing (1) having at least one supply (18) from the oil sump of the gearbox casing (1) for achieving different levels of the gear oil during operation of the gearing, the rotary axes of the or each intermediate wheel (7) and of the large wheel (8) being arranged on a substantially horizontal plane, and the insert (14) comprising at least two troughs (16, 17) in which the or each intermediate wheel (7) and the large wheel (8) of the gearing are partly immersed, wherein the or each supply (18) from the oil sump of the gearbox casing (1) enters into the trough (16) for the large wheel, (8) and the trough (16) for the large wheel (8) is connected to the or each further trough (17), so that different levels of the gear oil are maintained in the troughs (16, 17) when the gearing is in operation, **characterised in that** the or each trough (16, 17) has at least one stripper (19, 25) with at least one aperture (20, 26).

2. An arrangement according to claim 1, **characterised in that** the trough (16) for the large wheel (8) has at least the one aperture (20) or the like, and the or each further trough (17) has at least one supply (23), the supply (23) being connected to the or each aperture (20) of the trough (16).

3. An arrangement according to claim 2, **characterised in that** each supply (18, 23), each possible stripper (19, 25) and aperture (20) are symmetrically arranged.

4. An arrangement according to any one of claims 2 or 3, **characterised in that** at least one aperture (20) or the like of the trough (16) is in connection with at least one supply (23) of the or each further trough (17) via a channel (22).

5. An arrangement according to claim 4, **characterised in that** the channel (22) is delimited by an edge (21).

6. An arrangement according to any one of claims 1 to 5, **characterised in that** at least one overflow means (24) is arranged on the insert.

7. An arrangement according to any one of claims 1 to 6, **characterised in that** the insert (14) is formed to have walls as smooth as possible.

8. An arrangement according to any one of claims 1 to 7, **characterised in that** the insert (14) is made of aluminum or an aluminum alloy and produced by casting.

9. An arrangement according to any one of claims 1 to 8, **characterised in that** bushings or the like are provided to be plugged into the supplies (18, 23) and apertures (20, 26).

10. An arrangement according to any one of claims 1 to 9, **characterised in that**, on the insert (14), bores (27) for receiving connecting screws or the like, and slits (28) or the like are provided.

11. An arrangement according to any one of claims 1 to 10, **characterised in that** the insert (14) is integrated in the gearbox casing (1) or in the lower part of the gearbox casing (12), respectively, and optionally is produced with the former in one working procedure.

## Revendications

1. Dispositif de transmission par engrenages à plusieurs étages comprenant un carter d'engrenages (1), au moins une roue intermédiaire (7) et une roue de grand diamètre (8) reliée à un arbre de transmission (9), dans lequel de l'huile pour engrenages ou similaire est prévue dans le carter d'engrenages (1) pour la lubrification du mécanisme d'engrenages et un insert (14) disposé dans le réservoir d'huile du carter d'engrenages (1) ayant au moins une arrivée (18) à partir du réservoir d'huile du carter d'engrenages (1) pour l'obtention de différents niveaux d'huile pour engrenages au cours du fonctionnement du train d'engrenages, les axes de rotation de la ou des roues intermédiaires (7) et de la roue de grand diamètre (8) étant disposés dans un plan sensiblement horizontal et l'insert (14) présentant au moins deux cuvettes (16, 17), dans lesquelles la ou les roues intermédiaires (7) et la roue de grand diamètre (8) du train d'engrenages trempent partiellement, la ou les arrivées (18) à partir du réservoir d'huile du carter d'engrenages (1) débouchant dans la cuvette (16) pour la roue de grand diamètre (8), et la cuvette (16) pour la roue de grand diamètre (8) étant reliée à la ou les autres cuvettes (17), de sorte que lors du fonctionnement du train d'engrenages, différents niveaux d'huile pour engrenages sont maintenus dans les cuvettes (16, 17), **caractérisé en ce que** la ou les cuvettes (16, 17) présentent au moins un séparateur (19, 25), chacun ayant au moins une ouverture (20, 26).

2. Dispositif selon la revendication 1, **caractérisé en ce que** la cuvette (16) pour la roue de grand diamètre (8) présente au moins une ouverture (20) ou similaire, et la ou les autres cuvettes (17) présentent au moins une arrivée (23), laquelle arrivée (23) est en liaison avec la ou les ouvertures (20) de la cuvette (16).

3. Dispositif selon la revendication 2, **caractérisé en ce que** chaque arrivée (18, 23) est disposée symétriquement par rapport à chaque séparateur (19, 25) et ouverture (20) éventuelles.

4. Dispositif selon l'une des revendications 2 ou 3, **caractérisé en ce qu'**au moins une ouverture (20) ou similaire de la cuvette (16) est en liaison avec au moins une arrivée (23) de la ou des autres cuvettes (17) par l'intermédiaire d'une rigole (22).

5. Dispositif selon la revendication 4, **caractérisé en ce que** la rigole (22) est limitée par une bordure (21).

6. Dispositif selon l'une des revendications 1 à 5, **caractérisé en ce qu'**au moins un déversoir (24) est disposé sur l'insert.

7. Dispositif selon l'une des revendications 1 à 6, **caractérisé en ce que** l'insert (14) est réalisé avec des parois les plus lisses possible.

8. Dispositif selon l'une des revendications 1 à 7, **caractérisé en ce que** l'insert (14) est composé d'aluminium ou d'un alliage d'aluminium et est fabriqué par coulée dans un moule.

9. Dispositif selon l'une des revendications 1 à 8, **caractérisé en ce que** des manchons ou similaires, à enficher dans les arrivées (18, 23), et les ouvertures (20, 26), sont prévus.

10. Dispositif selon l'une des revendications 1 à 9, **caractérisé en ce que** des alésages (27) pour la réception de vis de liaison ou similaires, et des fentes (28), sont disposés sur l'insert (14).

11. Dispositif selon l'une des revendications 1 à 10, **caractérisé en ce que** l'insert (14) est intégré dans le carter d'engrenages (1) et/ou dans la partie inférieure du carter d'engrenages (12) et est, le cas échéant, fabriqué avec celui-ci en une même phase.
